# EUROPEAN PATENT APPLICATION

(11) **EP 4 701 297 A1**
(43) Date of publication of application: **25.02.2026**
(21) Application number: 24806237.4
(22) Date of filing: 10.04.2024
(51) Int. Cl.: H04W 72/044

(54) **RESOURCE CONFIGURATION METHOD FOR NETWORK SLICE, AND BASE STATION AND STORAGE MEDIUM**

(30) Priority: 18.05.2023 CN 202310568346
(71) Applicant: ZTE CORPORATION, Shenzhen, Guangdong 518057 (CN)
(72) Inventor: ZHOU, Shuqi, Shenzhen, Guangdong 518057 (CN)
(74) Representative: Canzler & Bergmeier Patentanwälte Partnerschaft mbB
(86) International application number: PCT/CN2024/086959
(87) International publication number: WO 2024/234878

(57) **Abstract**

Provided in the embodiments of the present disclosure are a resource configuration method for a network slice, and a base station and a computer storage medium. The method comprises: acquiring a quality evaluation index of each radio resource management policy; determining predicted attribute information of each radio resource management policy according to the quality evaluation index of each radio resource management policy; and updating the corresponding radio resource management policy according to the predicted attribute information, and reconfiguring a network resource for each network slice according to each updated radio resource management policy.

## Description

### CROSS-REFERENCE TO RELATED APPLICATIONS

This application claims priority from Chinese Patent Application No. 202310568346.0, filed on May 18, 2023, the disclosure of which is hereby incorporated by reference in its entirety.

### TECHNICAL FIELD

The present disclosure relates to the technical field of communications, and particularly relates to a resource configuration method for a network slice, and a base station and a storage medium.

### BACKGROUND

As one of key technologies in the 5th generation mobile communication technology (5G), network slicing can create and maintain multiple dedicated, virtualized and isolated logical networks on the basis of a shared physical network infrastructure, to meet differentiated requirements of different clients on network capabilities. As one of application values of network slicing, resource isolation means that network resources for different network slices can be isolated from each other. The resource isolation can be implemented by a radio resource management (RRM) policy and a protection mechanism, the RRM policy can allocate network resources for each network slice with respect to different service level agreements, so that different network slices can be configured with network resources in different sizes.

Currently, the RRM policy is fixed after being configured, which means that ratios of dedicated resources, priority resources and shared resources allocated to the network slices are fixed. However, since the network resources allocated to each network slice according to the RRM policy include dedicated resources, priority resources and shared resources, and the dedicated resources allocated to each network slice can only be used by the network slice, the dedicated resources cannot be shared with other network slices even if they are not used by the network slice, which may cause a waste of network resources, a relatively small number of radio resource control (RRC) connected users, a relatively low data radio bearer (DRB) utilization rate, and other problems.

### SUMMARY

In a first aspect, an embodiment of the present disclosure provides a resource configuration method for a network slice, including: acquiring a quality evaluation index of each radio resource management policy, the quality evaluation index including at least one of a physical resource block utilization rate, a block error rate, a signal to interference plus noise ratio, a number of accessed users, or a resource saturation corresponding to the radio resource management policy; determining, based on the quality evaluation index of each radio resource management policy, predicted attribute information of the radio resource management policy; and updating the radio resource management policy based on the predicted attribute information of the radio resource management policy to obtain an updated radio resource management policy, and reconfiguring a network resource for each network slice based on the updated radio resource management policy.

In a second aspect, an embodiment of the present disclosure further provides a base station, including a processor, a memory, a computer program stored on the memory and executable by the processor, and a data bus configured to enable connection and communication between the processor and the memory, the computer program is to be executed by the processor to cause the processor to implement the resource configuration method according to the first aspect.

In a third aspect, an embodiment of the present disclosure further provides a computer-readable storage medium, the storage medium has stored at least one computer program executable by at least one processor to cause the at least one processor to implement the resource configuration method according to the first aspect by executing the at least one computer program.

### BRIEF DESCRIPTION OF DRAWINGS

To explain technical solutions in embodiments of the present application more clearly, drawings for describing the embodiments will be illustrated briefly, and obviously, the drawings described below illustrate some implementations of the present application, and other drawings may be obtained by those of ordinary skill in the art based on these drawings without any creative labor.
FIG. 1 is a block diagram illustrating a structure of a base station according to an embodiment of the present disclosure;
FIG. 2 is a schematic flowchart of a resource configuration method according to an embodiment of the present disclosure;
FIG. 3 is a schematic flowchart of a sub-operation of the resource configuration method for a network slice shown in FIG. 2;
FIG. 4 is a schematic flowchart of a sub-operation of the resource configuration method for a network slice shown in FIG. 2;
FIG. 5 is a schematic diagram illustrating a scenario for training a machine learning model according to an embodiment of the present disclosure;
FIG. 6 is a schematic flowchart of a configuration of an RRM policy according to an embodiment of the present disclosure; and
FIG. 7 is a schematic flowchart of a resource configuration method according to an embodiment of the present disclosure.

### DETAIL DESCRIPTION OF EMBODIMENTS

The technical solutions in the embodiments of the present disclosure will be clearly and completely described below with reference to the accompanying drawings of the present disclosure. Obviously, the described embodiments are only some of the embodiments of the present disclosure, but not all embodiments. All other embodiments obtained by those of ordinary skill in the art based on the embodiments of the present disclosure without any creative effort fall in the protection scope of the present disclosure.

The flowcharts shown in the figures are merely illustrative, and do not necessarily include all contents and operations, nor do they necessarily have to be performed in the order described. For example, some operations may be decomposed, combined or partially combined, so that an actual order of performing the operations may be adjusted as desired by an actual situation.

It should be understood that the terminology used in the present disclosure is for the purpose of describing particular embodiments only and is not intended to be limiting of the present disclosure. As used in the specification and claims of the present disclosure, the singular forms "a", "an" and "the" are intended to include the plural forms as well, unless the context clearly indicates otherwise.

Currently, the RRM policy is fixed after being configured, which means that ratios of dedicated resources, priority resources and shared resources allocated to network slices are fixed. However, since the network resources allocated to each network slice according to the RRM policy include dedicated resources, priority resources and shared resources, and the dedicated resources allocated to each network slice can only be used by the network slice, the dedicated resources cannot be shared with other network slices even if they are not used by the network slice, which may cause a waste of network resources, a relatively small number of RRC connected users, a relatively low DRB utilization rate, and other problems.

To solve at least one problem mentioned above, an embodiment of the present disclosure provides a resource configuration method for a network slice, and a base station and a storage medium. In the resource configuration method, by acquiring a quality evaluation index of each radio resource management policy, and, based on the quality evaluation index of each radio resource management policy, performing a prediction to obtain predicted attribute information of the radio resource management policy; and then updating the radio resource management policy based on the predicted attribute information of the radio resource management policy to obtain an updated radio resource management policy, and reconfiguring a network resource for each network slice based on the updated radio resource management policy to implement a dynamic adjustment of network resources for network slices, the utilization rate of the network resources of the network slices, the number of RRC connected users, and the DRB utilization rate can be greatly improved.

Embodiments of the present disclosure and implementations thereof are described in detail below with reference to the accompanying drawings. The embodiments and the implementations described below and features thereof may be combined with each other without conflict.

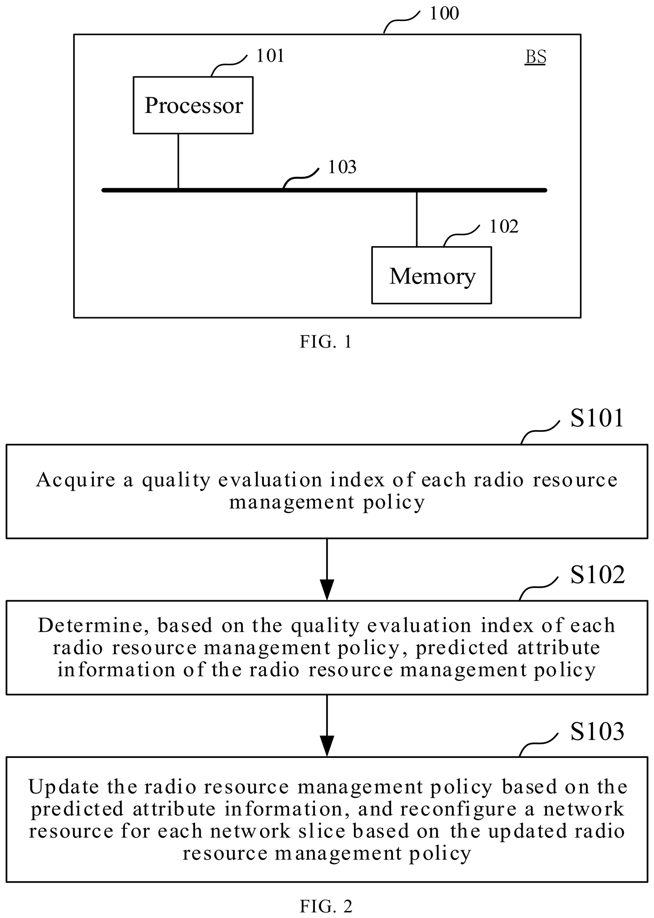

Referring to FIG. 1, FIG. 1 is a block diagram illustrating a structure of a base station according to an embodiment of the present disclosure.

As shown in FIG. 1, a base station 100 includes a processor 101 and a memory 102 connected by a bus 103, such as an inter-integrated circuit (I2C) bus.

The processor 101 is configured to provide computing and control capabilities to support operation of the base station. The processor 101 may be a central processing unit (CPU), or the processor 101 may be any other general purpose processor, digital signal processor (DSP), application specific integrated circuit (ASIC), field-programmable gate array (FPGA), or any other programmable logic device, discrete gate or transistor logic device, discrete hardware component, or the like. The general purpose processor may be a microprocessor, or any conventional processor or the like.

The memory 102 may be a flash chip, a read-only memory (ROM), a magnetic disk, an optical disk, a USB stick, or a removable hard disk.

Those skilled in the art will appreciate that the structure shown in FIG. 1 is merely a block diagram of partial structures associated with the solution in the embodiments of the present disclosure, and does not constitute any limitation to the base station to which the embodiments of the present disclosure are applied, and the base station may include more or less components than those shown in the drawings, or may combine certain components, or have a different arrangement of components.

In some implementations, the processor 101 is configured to run/execute a computer program stored in the memory 102, and implement the resource configuration method for a network slice provided in the embodiment of the present disclosure by executing the computer program.

In some implementations, the processor 101 is configured to run/execute a computer program stored in the memory, and by executing the computer program, perform the operations of: acquiring a quality evaluation index of each radio resource management policy, the quality evaluation index including at least one of a physical resource block utilization rate, a block error rate, a signal to interference plus noise ratio, a number of accessed users, or a resource saturation corresponding to the radio resource management policy; determining, based on the quality evaluation index of each radio resource management policy, predicted attribute information of the radio resource management policy; and updating the radio resource management policy based on the predicted attribute information of the radio resource management policy to obtain an updated radio resource management policy, and reconfiguring a network resource for each network slice based on the updated radio resource management policy.

In some implementations, during acquiring the quality evaluation index of each radio resource management policy, the processor 101 is configured to perform the operations of: acquiring a resource configuration influence index of each network slice, the resource configuration influence index including at least one of a physical resource block utilization rate, a block error rate, a signal to interference plus noise ratio, a number of accessed users, or a resource saturation of the network slice; and determining the quality evaluation index of the radio resource management policy based on the resource configuration influence index of at least one network slice corresponding to the radio resource management policy.

In some implementations, the predicted attribute information includes first attribute information or second attribute information, the first attribute information includes a radio resource management policy ratio group including a radio resource management policy dedicated ratio, a radio resource management policy minimum ratio, and a radio resource management policy maximum ratio; and the second attribute information includes at least one radio resource management policy ratio group, and effective time information corresponding to each radio resource management policy ratio group, the effective time information is configured to indicate an effective time period of the radio resource management policy ratio group, and the radio resource management policy ratio group includes a radio resource management policy dedicated ratio, a radio resource management policy minimum ratio, and a radio resource management policy maximum ratio.

In some implementations, in response to the radio resource management policy including the second attribute information, the processor 101 is further configured to perform the operation of: determining and enabling a target radio resource management policy ratio group based on clock information and the second attribute information.

In some implementations, during determining the target radio resource management policy ratio group based on the clock information and the second attribute information, the processor 101 is configured to perform the operation of: in response to the second attribute information containing effective time information matched with the clock information, determining the radio resource management policy ratio group corresponding to the effective time information as the target radio resource management policy ratio group.

In some implementations, during determining the target radio resource management policy ratio group based on the clock information and the second attribute information, the processor 101 is further configured to perform the operation of: in response to the second attribute information containing no effective time information matched with the clock information, determining a preset radio resource management policy ratio group as the target radio resource management policy ratio group.

In some implementations, during determining, based on the quality evaluation index of each radio resource management policy, the predicted attribute information of the radio resource management policy, the processor 101 is configured to perform the operation of: running a pre-trained policy attribute prediction model to perform policy attribute prediction based on the quality evaluation index of each radio resource management policy, to obtain the predicted attribute information of the radio resource management policy. In some implementations, the policy attribute prediction model is obtained by iteratively training a preset machine learning model based on multiple pieces of sample data, and each piece of sample data includes a quality evaluation index and labeled attribute information of a radio resource management policy.

In some implementations, the network resource includes a physical resource block resource for the network slice.

It should be noted that, as can be clearly understood by those skilled in the art, for convenience and simplicity of description, specific operations of the base station described above may refer to those in the resource configuration method for a network slice described hereafter, and thus is not repeated here.

Hereinafter, a resource configuration method according to an embodiment of the present disclosure will be described in detail with reference to the base station in FIG. 1. It should be noted that the base station in FIG. 1 is only used to explain the resource configuration method for a network slice provided in the embodiment of the present disclosure, but does not constitute any limitation to an application scenario of the resource configuration method for a network slice in the embodiment of the present disclosure.

Referring to FIG. 2, FIG. 2 is a schematic flowchart of a resource configuration method according to an embodiment of the present disclosure. The resource configuration method is performed by a base station to improve the utilization rate of network resources of a network slice, the number of RRC connected users and the DRB utilization rate.

As shown in FIG. 2, the resource configuration method for a network slice includes the following operations S101 to S103.

At operation S101, acquiring a quality evaluation index of each radio resource management policy.

In the embodiment, the quality evaluation index of the radio resource management (RRM) policy includes at least one of a physical resource block (PRB) utilization rate, a block error rate (BLER), a signal to interference plus noise ratio (SINR), a number of accessed users, or a resource saturation corresponding to the RRM policy. In some implementations, the number of accessed users corresponding to the RRM policy is a total number, an average number, or a maximum number of user equipments (UEs) carried by all network slices in the RRM policy. The resource saturation corresponding to the RRM policy is a saturation of network resources configured in the RRM policy.

In some implementations, the RRM policy defines a parameter RRMPolicy, which includes resource type information (Resource Type), a RRM policy member list (rRMPolicyMemberList), target attribute information, and the like. The target attribute information includes an RRM policy ratio group, or the target attribute information includes at least one RRM policy ratio group, and effective time information corresponding to each radio RRM policy ratio group. The RRM policy ratio group includes an RRM policy dedicated ratio (rRMPolicyDedicatedRatio), an RRM policy minimum ratio (rRMPolicyMinRatio), and an RRM policy maximum ratio (rRMPolicyMaxRatio). The effective time information is configured to indicate an effective time period of the RRM policy ratio group. It will be appreciated that if the attribute information of the RRM policy does not contain the effective time information, the RRM policy ratio group in the attribute information of the RRM policy is effective 24 hours per day until the RRM policy is updated.

In some implementations, the resource type information defines resource types constrained by the RRM policy, which include PRB resources, a number of RRC connected users, a DRB utilization rate, and the like. The RRM policy member list defines RRM policy members (RRMPolicyMember) constrained by the RRM policy, which may be defined by a public land mobile network (PLMNId) and single network slice selection assistance information (S-NSSAI). The PRB resources include dedicated resources, priority resources and shared resources. The RRM policy dedicated ratio defines a ratio of dedicated resources. The RRM policy dedicated ratio and the RRM policy minimum ratio define a ratio of priority resources, which may be obtained by the RRM policy minimum ratio minus the RRM policy dedicated ratio. The RRM policy maximum ratio and the RRM policy minimum ratio define a ratio of shared resources, which may be obtained by the RRM policy maximum ratio minus the RRM policy minimum ratio.

It should be noted that a sum of RRM policy dedicated ratios simultaneously defined in a plurality of RRM policies corresponding to carriers of the base station is less than or equal to 100%. The sum of RRM policy minimum ratios simultaneously defined in a plurality of RRM policies corresponding to carriers of the base station is less than or equal to 100%. The RRM policy dedicated ratio, the RRM policy minimum ratio, and the RRM policy maximum ratio defined in the RRM policy should satisfy that: the RRM policy dedicated ratio is less than or equal to the RRM policy minimum ratio, and the RRM policy minimum ratio is less than or equal to the RRM policy maximum ratio.

In some implementations, the effective time information includes a repetition type and calendar information of the repetition type, the repetition type includes no repetition, monthly repetition, or weekly repetition, and the calendar information includes at least one date and at least one time period on each date. In response to the repetition type being no repetition, it indicates that the RRM policy ratio group is only effective in one or more time periods configured on the current day; in response to the repetition type being monthly repetition, it indicates that the RRM policy ratio group is effective in one or more time periods configured on one or more days in each month; and in response to the repetition type being weekly repetition, it indicates that the RRM policy ratio group is effective in one or more time periods configured on one or more days in each week.

For example, if the repetition type in the effective time information T1 is no repetition, the date configured with the effective time information is May 10, 2023, and the configured time period is from 13:31 to 17:30, then the RRM policy ratio group corresponding to the effective time information T1 is effective only in the time period from 13:31 to 17:30 on May 10, 2023. For another example, the repetition type in the effective time information T2 is monthly repetition, the calendar information includes dates 10, 15 and 20, and the time periods corresponding to each of the dates 10, 15 and 20 are from 09:01am to 12:00am and from 13:31pm to 17:30pm, then the RRM policy ratio group corresponding to the effective time information T2 is effective in the time periods from 09:01am to 12:00am and from 13:31pm to 17:30pm on the dates 10, 15 and 20 every month. If the repetition type in the effective time information T3 is weekly repetition, the calendar information includes Saturday and Sunday, and the time periods corresponding to each of Saturday and Sunday are from 07:00am to 23:00pm, then the RRM policy ratio group corresponding to the effective time information T3 is effective in the time period from 07:00am to 23:00pm on Saturday and Sunday every week.

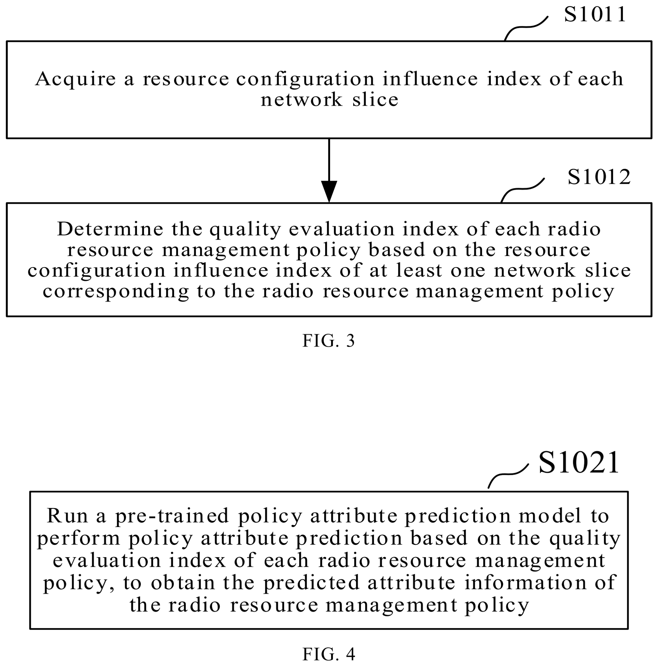

In some implementations, as shown in FIG. 3, the operation S101 includes sub-operations S1011 to S1012.

At sub-operation S1011, acquiring a resource configuration influence index of each network slice.

In the embodiment, the resource configuration influence index of the network slice includes at least one of a physical resource block utilization rate, a block error rate, a signal to interference plus noise ratio, a number of accessed users, or a resource saturation of the network slice. In some implementations, the number of accessed users of the network slice is the number of user equipments carried by the network slice, and the resource saturation of the network slice is a saturation of network resources configured for the network slice.

At sub-operation S1012, determining the quality evaluation index of the radio resource management policy based on the resource configuration influence index of at least one network slice corresponding to the radio resource management policy.

In the embodiment, since the RRM policy defines the resource configuration of at least one network slice, the quality evaluation index of the RRM policy can be accurately estimated by the resource configuration influence index of at least one network slice defined in the RRM policy.

In some implementations, the quality evaluation index of the radio resource management policy may be determined based on the resource configuration influence index of at least one network slice corresponding to the radio resource management policy by: in response to the RRM policy defining the resource configuration of one network slice, taking the resource configuration influence index of the network slice as the quality evaluation index of the RRM policy; or, in response to the RRM policy defining the resource configuration of multiple network slices, comparing resource configuration influence indexes of the network slices to determine a maximum resource configuration influence index as the quality evaluation index of the RRM policy; or, in response to the RRM policy defining the resource configuration of multiple network slices, calculating an average of the resource configuration influence indexes of the network slices, and taking the average of the resource configuration influence indexes as the quality evaluation index of the RRM policy; or, in response to the RRM policy defining the resource configuration of multiple network slices, taking a sum of resource configuration influence indexes of the network slices, as the quality evaluation index of the RRM policy.

For example, if a certain RRM policy defines resource configuration for a network slice A, a network slice B, and a network slice C, the resource configuration influence indexes of the network slice A, the network slice B, and the network slice C may be obtained and summed to calculate an average of the resource configuration influence indexes as the quality evaluation index of the RRM policy, or if the resource configuration influence index of the network slice B is the greatest, the resource configuration influence index of the network slice B may be used as the quality evaluation index of the RRM policy.

For example, if the physical resource block utilization rates of the network slice A, the network slice B, and the network slice C are 80%, 85%, and 96%, respectively, an average of these three physical resource block utilization rates 80%, 85%, and 96% can be calculated to be 87%, so that 87% may be used as the physical resource block utilization rate of the RRM policy corresponding to the network slice A, the network slice B, and the network slice C. Alternatively, a maximum value of these three physical resource block utilization rates 80%, 85%, and 96% is 96%, then 96% may be used as the physical resource block utilization rate of the RRM policy corresponding to the network slice A, the network slice B, and the network slice C.

For another example, the number of accessed users of the network slice A, the number of accessed users of the network slice B and the number of accessed users of the network slice C are N1, N2 and N3, respectively, N3 is greater than N2, and N2 is greater than N1, then an average (N1+N2+N3)/3 of N1, N2 and N3, or a sum (N1+N2+N3) of N1, N2 and N3, may be used as the number of accessed users of the RRM policy corresponding to the network slice A, the network slice B and the network slice C, or a maximum value of N1, N2 and N3, i.e., N3, may be used as the number of accessed users of the RRM policy corresponding to the network slice A, the network slice B and the network slice C.

At operation S102, determining, based on the quality evaluation index of each radio resource management policy, predicted attribute information of the radio resource management policy.

In the embodiment, the attribute information of the RRM policy may be predicted and estimated based on at least one of the physical resource block utilization rate, the block error rate, the signal to interference plus noise ratio, the number of accessed users, or the resource saturation corresponding to the RRM policy, so as to obtain the predicted attribute information of the RRM policy, for facilitating subsequent updates of the RRM policy based on the predicted attribute information.

In some implementations, determining, based on the quality evaluation index of each radio resource management policy, the predicted attribute information of the radio resource management policy may be implemented by: for the RRM policy, in response to the current attribute information of the RRM policy not containing effective time information, determining a resource configuration score of the RRM policy based on at least one of the physical resource block utilization rate, the block error rate, the signal to interference plus noise ratio, the number of accessed users, or the resource saturation corresponding to the RRM policy, determining a ratio adjustment value based on the resource configuration score of the RRM policy; and adjusting an RRM policy ratio group in the current attribute information of the RRM policy based on the ratio adjustment value, and taking the adjusted RRM policy ratio group as the predicted attribute information of the RRM policy. In some implementations, the resource configuration score is used to characterize the quality of the RRM policy ratio group defined in the RRM policy. The higher the resource configuration score is, the higher the quality of the RRM policy ratio group defined in the RRM policy is, and the lower the ratio adjustment value of the RRM policy is. In contrast, the lower the resource configuration score, the lower the quality of the RRM policy ratio group defined in the RRM policy is, and the greater the ratio adjustment value of the RRM policy is.

In some implementations, in response to the current attribute information of the RRM policy containing effective time information, at least one of a physical resource block utilization rate, a block error rate, a signal to interference plus noise ratio, a number of accessed users, or a resource saturation of the RRM policy in a time period of the effective time information is obtained; a resource configuration score of the RRM policy in the time period of the effective time information is determined based on the at least one of the physical resource block utilization rate, the block error rate, the signal to interference plus noise ratio, the number of accessed users, or the resource saturation of the RRM policy in the time period of the effective time information; a ratio adjustment value is determined based on the resource configuration score of the RRM policy corresponding to the time period; and an RRM policy ratio group corresponding to the time period in the current attribute information of the RRM policy is adjusted based on the ratio adjustment value, and the adjusted RRM policy ratio group is taken as the predicted attribute information of the RRM policy.

In some implementations, a preset resource configuration score determination model may be run to perform resource configuration score determination based on at least one of the physical resource block utilization rate, the block error rate, the signal to interference plus noise ratio, the number of accessed users, or the resource saturation corresponding to the RRM policy, to obtain the resource configuration score of the RRM policy. Likewise, a preset resource configuration score determination model may be run to perform resource configuration score determination based on at least one of the physical resource block utilization rate, the block error rate, the signal to interference plus noise ratio, the number of accessed users, or the resource saturation of the RRM policy in the time period of the effective time information, to obtain the resource configuration score of the RRM policy ratio group corresponding to the time period. In some implementations, the preset resource configuration score determination model is obtained by iteratively training a neural network model with a plurality of training samples, the training samples each include at least one of a physical resource block utilization rate, a block error rate, a signal to interference plus noise ratio, a number of accessed users, or a resource saturation, and a labeled resource configuration score.

In some implementations, as shown in FIG. 4, the operation S102 includes a sub-operation S1021.

At sub-operation S1021, running a pre-trained policy attribute prediction model to perform policy attribute prediction based on the quality evaluation index of each radio resource management policy, to obtain the predicted attribute information of the radio resource management policy.

In the embodiment, the policy attribute prediction model is obtained by iteratively training a preset machine learning model based on multiple pieces of sample data, and each piece of sample data includes a quality evaluation index and labeled attribute information of an RRM policy. The multiple pieces of sample data include multiple pieces of first sample data and multiple pieces of second sample data. The labeled attribute information in the first sample data includes an RRM policy ratio group, and the labeled attribute information in the second sample data includes at least one RRM policy ratio group, and effective time information corresponding to each radio RRM policy ratio group. By running the pre-trained policy attribute prediction model to perform policy attribute prediction on the quality evaluation index of the RRM policy, the predicted attribute information of the radio resource management policy can be accurately predicted, which facilitates subsequent updates of the RRM policy based on the predicted attribute information, to obtain an accurate RRM policy.

In some implementations, the preset machine learning model may be a Markov model or a neural network model. The neural network model includes, but is not limited to, a convolutional neural networks (CNN) model, a deep neural networks (DNN) model, a recurrent neural network (RNN) model, a factorisation machine supported neural network (FNN) model, a neural factorization machine (NFM) model, or an attentional factorization machines (AFM) model.

In some implementations, running the pre-trained policy attribute prediction model to perform policy attribute prediction based on the quality evaluation index of each radio resource management policy to obtain the predicted attribute information of the radio resource management policy may be implemented by: sequentially inputting the quality evaluation index of each RRM policy into the pre-trained policy attribute prediction model to perform the policy attribute prediction to obtain the predicted attribute information of the radio resource management policy; or creating multiple threads, running the pre-trained policy attribute prediction model by calling the threads in parallel, to perform policy attribute prediction based on quality evaluation indexes of multiple RRM policies, to obtain the predicted attribute information of each of the RRM policies, until the predicted attribute information of each of all RRM policies are obtained.

For example, the number of RRM policies is N, the number of threads is M, and N and M each are an integer greater than or equal to 2. In response to N being less than or equal to M, the pre-trained policy attribute prediction model is run by calling N threads in parallel to perform policy attribute prediction based on quality evaluation indexes of the N RRM policies, to obtain predicted attribute information of the N RRM policies. In response to N being greater than M, the pre-trained policy attribute prediction model is run by calling the M threads in parallel to perform policy attribute prediction based on quality evaluation indexes of M RRM policies, to obtain predicted attribute information of the M RRM policies. In response to any certain thread being idle, the idle thread is called to run the pre-trained policy attribute prediction model to perform policy attribute prediction based on the quality evaluation index of one of the remaining N-M RRM policies, to obtain predicted attribute information of the RRM policy, until the predicted attribute information of each of the N RRM policies is obtained.

In some implementations, iteratively training the preset machine learning model based on multiple pieces of sample data to obtain the policy attribute prediction model may be implemented by: initializing a parameter of the preset machine learning model; selecting one piece of sample data from the multiple pieces of sample data as target sample data; inputting a quality evaluation index in the target sample data into the preset machine learning model to perform the policy attribute prediction, to obtain predicted attribute information; calculating a model loss value based on the predicted attribute information and labeled attribute information in the target sample data; in response to the model loss value being greater than a preset loss value, updating the parameter of the preset machine learning model, and returning to the operation of selecting one piece of sample data from the multiple pieces of sample data as target sample data; and in response to the model loss value being less than or equal to the preset loss value, stopping the training to obtain the policy attribute prediction model.

In some implementations, quality evaluation indexes and target attribute information of each RRM policy during a peak period, a shoulder period, and a valley period of traffic demands in the base station may be collected in advance as sample data, and then the preset machine learning model is iteratively trained with the sample data, to obtain the policy attribute prediction model more accurately. In some implementations, the target attribute information includes a RRM policy ratio group defined in the RRM policy, or the target attribute information includes at least one RRM policy ratio group and effective time information corresponding to each RRM policy ratio group defined in the RRM policy. For example, time periods such as from 07:00am to 09:00am, from 12:01pm to 13:00pm, from 17:31pm to 22:00pm, and the like are peak periods, time periods such as from 09:01am to 12:00am, from 13:31pm to 17:30pm, from 22:01pm to 00:00, and the like are shoulder periods, and the time period from 00:01am to 07:00am is a valley period.

It will be appreciated that the quality evaluation index of the RRM policy includes at least one of a physical resource block utilization rate, a block error rate, a signal to interference plus noise ratio, a number of accessed users, or a resource saturation corresponding to the RRM policy. For example, the physical resource block utilization rate, the block error rate, the signal to interference plus noise ratio, the number of accessed users, and the resource saturation corresponding to the RRM policy, and the target attribute information of the RRM policy, are used as sample data to train the machine learning model to obtain the policy attribute prediction model. Then, the policy attribute prediction model is run to comprehensively determine the predicted attribute information of the RRM policy based on the physical resource block utilization rate, the block error rate, the signal to interference plus noise ratio, the number of accessed users, and the resource saturation corresponding to the RRM policy.

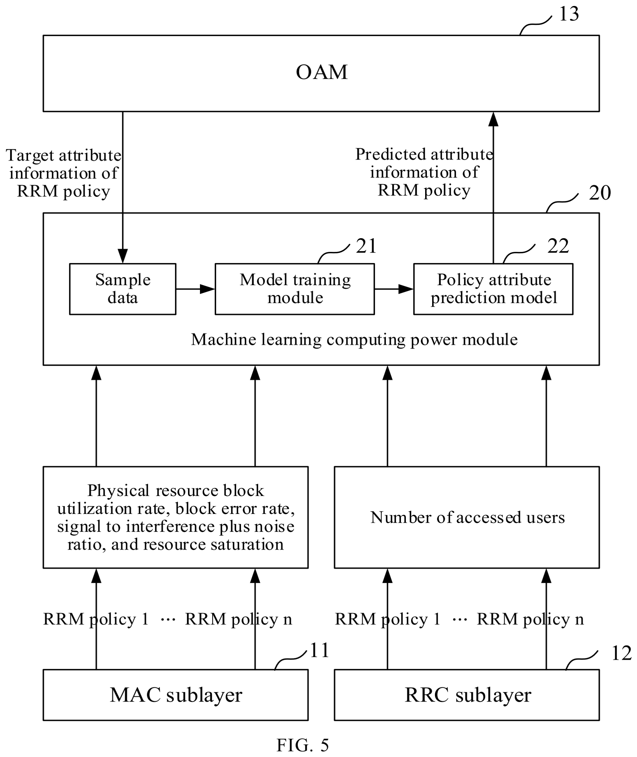

For example, as shown in FIG. 5, in a training phase, a media access control (MAC) sublayer 11 in the base station obtains a physical resource block utilization rate, a block error rate, a signal to interference plus noise ratio, and a resource saturation of each RRM policy, and transfers the physical resource block utilization rate, the block error rate, the signal to interference plus noise ratio, and the resource saturation of each RRM policy (RRM policy 1 to RRM policy n) to a machine learning computing power module 20; a radio resource control (RRC) sublayer 12 obtains a number of accessed users of each RRM policy and transfers it to the machine learning computing power module 20; an operation administration and maintenance (OAM) 13 obtains target attribute information of each RRM policy and transfers it to the machine learning computing power module 20; the machine learning computing power module 20 stores the physical resource block utilization rate, the block error rate, the signal to interference plus noise ratio, the resource saturation and the target attribute information of each RRM policy as sample data; and in response to the quantity of the stored sample data reaches a preset expectation, the machine learning computing power module 20 calls a model training module 21 to iteratively training the preset machine learning model with multiple pieces of sample data to obtain a policy attribute prediction model 22, and the policy attribute prediction model 22 performs attribute predication after passing accuracy verification.

In a prediction phase, the MAC sublayer 11 transfers a physical resource block utilization rate, a block error rate, a signal to interference plus noise ratio, and a resource saturation of each RRM policy to the machine learning computing power module 20; the RRC sublayer 12 transfers a number of accessed users of each RRM policy to the machine learning computing power module 20; the machine learning computing power module 20 runs the policy attribute prediction model 22 to perform policy attribute prediction based on the physical resource block utilization rate, the block error rate, the signal to interference plus noise ratio, the resource saturation and the number of accessed users of each RRM policy, to obtain predicted attribute information of each RRM policy and transfer it to OAM, so that the OAM updates the radio resource management policy based on the predicted attribute information of the RRM policy, and reconfigures a network resource for each network slice based on the updated radio resource management policy.

It will be appreciated that the machine learning computing power module 20 may be an internal module of the base station, or an internal module in a computing device communicatively connected to the base station, which is not specifically limited in the embodiment of the present disclosure. Alternatively, the model training module 21 in the machine learning computing power module 20 is deployed in a server communicatively connected to the base station, and the policy attribute prediction model 22 in the machine learning computing power module 20 is deployed in the base station.

At operation S103, updating the radio resource management policy based on the predicted attribute information of the radio resource management policy, and reconfiguring a network resource for each network slice based on the updated radio resource management policy.

In the embodiment, the network resource for the network slice includes a physical resource block resource for the network slice, the predicted attribute information of the RRM policy may include first attribute information or second attribute information, and the first attribute information includes an RRM policy ratio group including an RRM policy dedicated ratio, an RRM policy minimum ratio, and an RRM policy maximum ratio. The second attribute information includes at least one RRM policy ratio group, and effective time information corresponding to each radio RRM policy ratio group. The effective time information is configured to indicate an effective time period of the RRM policy ratio group.

In some implementations, updating the radio resource management policy based on the predicted attribute information of the radio resource management policy and reconfiguring the network resource for each network slice based on the updated radio resource management policy may be implemented by: updating target attribute information defined in each RRM policy in an OAM system to the predicted attribute information, and further updating each RRM policy in the OAM system; and generating a JavaScript object notation (JSON) file according to each updated RRM policy in the OAM system; transferring the JSON file to the RRC; the RRC parses the JSON file to obtain and store resource type information, a RRM policy member list, and target attribute information defined in each updated RRM policy; and the RRC triggers a parameter reconfiguration request based on the JSON file, and sends the parameter reconfiguration request to each sublayer, each sublayer makes a response according to the JSON file in the parameter reconfiguration request to reconfigure the network resource for each network slice. The sublayers include a MAC sublayer, a packet data convergence protocol (PDCP) sublayer, and a radio link control (RLC) sublayer.

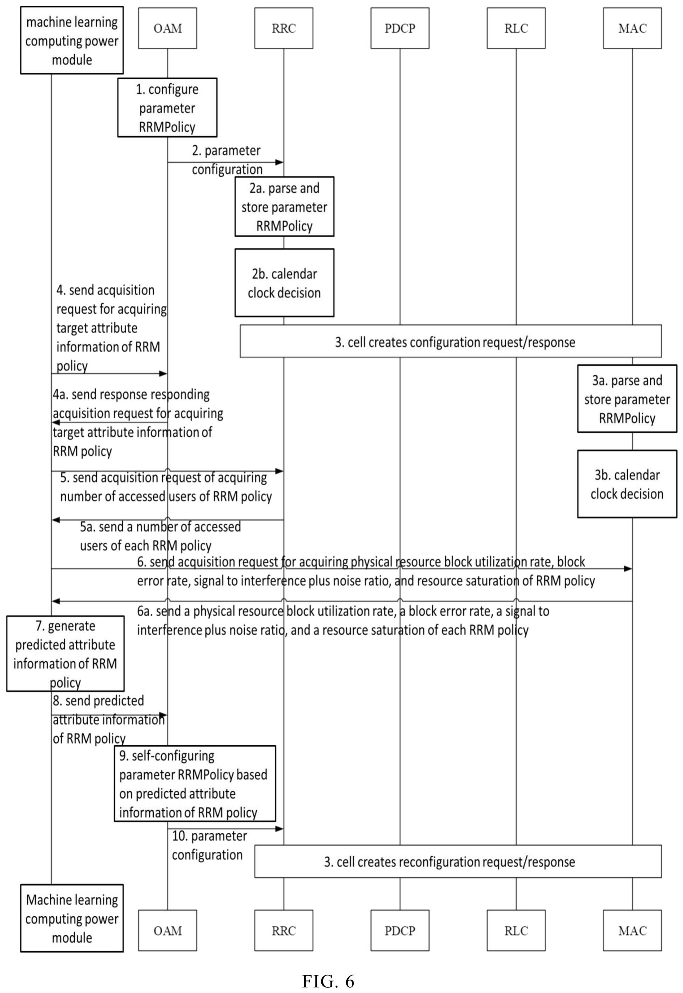

Referring to FIG. 6, FIG. 6 is a schematic flowchart of configuring an RRM policy according to an embodiment of the present disclosure. As shown in FIG. 6, a flow of configuring an RRM policy includes the following operations 1 to 11.

In operation 1, a parameter RRMPolicy is configured. Specifically, the parameter RRMPolicy is configured in the OAM of a 5G base station, and is activated. The parameter RRMPolicy includes resource type information, a RRM policy member list, target attribute information, and the like defined in the RRM policy.

In operation 2, the RRC sublayer performs parameter configuration. Specifically, the OAM generates a JSON file based on the configured parameter RRMPolicy, and transfers the generated JSON file to the RRC sublayer in a protocol stack, the RRC sublayer forwards the JSON file to the PDCP sublayer, the RLC sublayer, and the MAC sublayer.

In operation 2a, the parameter RRMPolicy is parsed and stored. Specifically, after receiving the JSON file from the OAM, the RRC sublayer parses the JSON file to obtain and store the parameter RRMPolicy. Since the RRC sublayer performs a user access control, the resource isolation of RRC and DRB resources is completed in the RRC sublayer.

In operation 2b, the RRC sublayer performs a calendar clock decision. Specifically, the RRC sublayer may make a periodic decision based on calendar information and clock information contained in the configured parameter RRMPolicy, to decide a specific time period in which the RRM policy dedicated ratio (rRMPolicyDedicatedRatio), the RRM policy minimum ratio (rRMPolicyMinRatio), and the RRM policy maximum ratio (rRMPolicyMaxRatio) defined in the RRM policy are effective. The calendar clock decision specifically includes: determining whether effective time information matched with the clock information is present in the parameter RRMPolicy defined in the RRM policy; enabling an RRM policy ratio group corresponding to the effective time information in response to the effective time information matched with the clock information being present in the parameter RRMPolicy defined in the RRM policy; and enabling a preset RRM policy ratio group in response to no effective time information matched with the clock information being present in the parameter RRMPolicy defined in the RRM policy.

In operation 3, a cell creates a configuration request/response. Specifically, the RRC sublayer triggers an RRMPolicy_parameter configuration request based on the received JSON file, and sends the RRMPolicy_parameter configuration request to the PDCP sublayer, the RLC sublayer, and the MAC sublayer, the PDCP sublayer, the RLC sublayer, and the MAC sublayer make responses according to the JSON file in the parameter configuration request.

In operation 3a, the MAC sublayer parses and stores the parameter RRMPolicy. Specifically, after receiving the RRMPolicy_parameter configuration request from the RRC sublayer, the MAC sublayer parses the JSON file in the RRMPolicy_parameter configuration request to obtain and store the parameter RRMPolicy. Since the MAC sublayer has a resource scheduling function, the resource isolation of the PRB resources is completed in the MAC sublayer.

At operation 3b, the MAC sublayer performs a calendar clock decision, the MAC sublayer may make a periodic decision based on calendar information and clock information contained in the configured parameter RRMPolicy, to decide a specific time period in which the RRM policy dedicated ratio (rRMPolicyDedicatedRatio), the RRM policy minimum ratio (rRMPolicyMinRatio), and the RRM policy maximum ratio (rRMPolicyMaxRatio) defined in the RRM policy are effective. The calendar clock decision specifically includes: determining whether effective time information matched with the clock information is present in the parameter RRMPolicy defined in the RRM policy; enabling an RRM policy ratio group corresponding to the effective time information in response to the effective time information matched with the clock information being present in the parameter RRMPolicy defined in the RRM policy; and enabling a preset RRM policy ratio group in response to no effective time information matched with the clock information being present in the parameter RRMPolicy defined in the RRM policy.

In operation 4, for collecting sample data, the machine learning computing power module sends an acquisition request, for acquiring or collecting target attribute information of an RRM policy, to the OAM.

In operation 4a, after receiving the acquisition request for acquiring or collecting the target attribute information of the RRM policy from the machine learning computing power module, the OAM sends a response, for responding the acquisition request for acquiring or collecting the target attribute information of the RRM policy, to the machine learning computing power module. If the parameter RRMPolicy is configured, the response carries target attribute information in the configured parameter RRMPolicy, and if the parameter RRMPolicy is not configured, the response is null.

In operation 5, for predicting attribute information of the RRM policy, the machine learning computing power module actively sends an acquisition request, for acquiring a number of accessed users of the RRM policy, to the RRC sublayer.

In operation 5a, after receiving the acquisition request, the RRC sublayer determines the number of accessed users for each RRM policy based on the acquisition request, and sends the number of accessed users of each RRM policy to the machine learning computing power module.

In operation 6, for predicting attribute information of the RRM policy, the machine learning computing power module further actively sends an acquisition request, for acquiring a physical resource block utilization rate, a block error rate, a signal to interference plus noise ratio, and a resource saturation of the RRM policy, to the MAC sublayer.

In operation 6a, after receiving the acquisition request, the MAC sublayer determines a physical resource block utilization rate, a block error rate, a signal to interference plus noise ratio, a number of accessed users, and a resource saturation of each RRM policy based on the acquisition request, and then sends them to the machine learning computing power module.

In operation 7, predicted attribute information of the RRM policy is generated. Specifically, after obtaining the physical resource block utilization rate, the block error rate, the signal to interference plus noise ratio, the number of accessed users, and the resource saturation of each RRM policy, the machine learning computing power module runs a policy attribute prediction model to perform policy attribute prediction based on the physical resource block utilization rate, the block error rate, the signal to interference plus noise ratio, the number of accessed users, and the resource saturation of each RRM policy, to obtain the predicted attribute information of each RRM policy.

In operation 8, the machine learning computing power module sends the predicted attribute information of each RRM policy to the OAM.

In operation 9, after receiving the predicted attribute information of each RRM policy, the OAM reconfigures the parameter RRMPolicy based on the predicted attribute information of the RRM policy, and activates the reconfigured parameter RRMPolicy.

In operation 10, after the OAM reconfigures the parameter RRMPolicy, the RRC sublayer performs parameter reconfiguration again. Specifically, the OAM generates a JSON file based on the reconfigured parameter RRMPolicy and other parameters, and transfers the generated JSON file to the RRC sublayer in a protocol stack, the RRC sublayer forwards the JSON file to each sublayer, i.e., the PDCP sublayer, the RLC sublayer, and the MAC sublayer.

In operation 11, the cell creates a reconfiguration request/response. Specifically, the RRC sublayer triggers an RRMPolicy_parameter reconfiguration request based on the received JSON file, and sends the reconfiguration request to the PDCP sublayer, the RLC sublayer, and the MAC sublayer, the PDCP sublayer, the RLC sublayer, and the MAC sublayer make responses according to the JSON file in the parameter reconfiguration request.

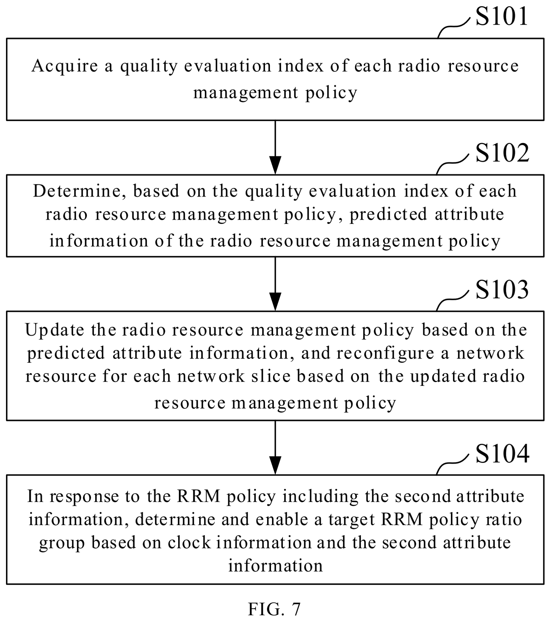

In some implementations, as shown in FIG. 7, the resource configuration method further includes operation S104.

At operation S104, in response to the RRM policy including the second attribute information, determining and enabling a target RRM policy ratio group based on clock information and the second attribute information.

In the embodiment, the base station may periodically determine and enables a target RRM policy ratio group based on clock information and the second attribute information. For example, the base station may determine and enable a target RRM policy ratio group every two hours based on the clock information and the second attribute information. The clock information may be universal time coordinated (UTC) clock information. It should be noted that operation S104 may be executed before or after operation S103, or before or after operation S102 or S101, which is not specifically limited in the embodiment of the present disclosure.

In some implementations, in response to the second attribute information containing effective time information matched with the clock information, a RRM policy ratio group corresponding to the effective time information is determined as the target RRM policy ratio group. In response to the second attribute information not containing effective time information matched with the clock information, a preset RRM policy ratio group is determined as the target RRM policy ratio group. The preset RRM policy ratio group may be set based on an actual situation, which is not specifically limited in the embodiment of the present disclosure.

For example, the effective time information includes a date of 10, and time periods from 09:01am to 12:00am and from 13:30pm to 17:30pm correspond to the date of 10, the time period from 09:01am to 12:00am corresponds to an RRM policy ratio group A, and the time period from 13:30pm to 17:30pm corresponds to an RRM policy ratio group B. Therefore, if the current clock information is 10:00am on a date 10/xx/xxxx, the RRM policy ratio group A is used as the target RRM policy ratio group and enabled, so that the network slice uses a network resource for the RRM policy ratio group A to carry a user equipment. After a period of time, if the current clock information becomes 13:00pm on the date 10/xx/xxxx (date/moth/year), a preset RRM policy ratio group is enabled, so that the network slice uses a network resource for the preset RRM policy ratio group to carry a user equipment. Further after a period of time, if the current clock information becomes 13:30pm on the date 10/xx/xxxx, the RRM policy ratio group B is used as the target RRM policy ratio group and enabled, so that the network slice uses a network resource for the RRM policy ratio group B to carry a user equipment.

In some implementations, the UE may obtain PLMN information in an RRCConnectionSetupComplete message during an access process. The base station may select appropriate operator information using the PLMN provided in the RRC message, and select an appropriate network slice based on a slice service type (SST) and slice differentiator (SD) information provided in the PDUSession created by the UE. Since the network slice is constrained by the matched RRM policy and the RRM resource defines the RRM policy ratio group and the effective time information, isolation characteristics of PRB, RRC, or DRB resources of the network slice may become effective in the time period specified in the effective time information.

An embodiment of the present disclosure further provides a computer-readable storage medium storing thereon at least one computer program, which is executable by at least one processor to cause the at least one processor to implement the resource configuration method according to an embodiment of the present disclosure by executing the at least one computer program.

In some implementations, the computer-readable storage medium may be an internal storage unit of the base station described in the foregoing embodiment, for example, may be a hard disk or a memory of the base station. The computer-readable storage medium may also be an external storage device of the base station, such as a plug-in hard disk, a smart media card (SMC), a secure digital (SD) card, a flash card, or the like equipped on the base station.

Those of ordinary skill in the art will appreciate that all or some operations of the method, function modules/units in the system and apparatus described above may be implemented as software, firmware, hardware, and suitable combinations thereof. In a hardware embodiment, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

It should be understood that the term "and/or" as used in the description and claims of the present disclosure refers to any and all possible combinations of one or more of the associated listed items and includes such combinations. It should be noted that the term "comprise", "include " or any variant thereof used herein means to be non-exclusive so that a process, method, item or system including a series of elements includes not only said elements, but also other elements not explicitly listed, or inherent elements of such process, method, item or system. In the absence of more limitations, an element defined by "comprising/including a ..." do not exclude the existence of additional identical elements in the process, method, item or system including the element.

The above serial numbers in the embodiments of the present disclosure are merely for description, and do not represent superior or inferior. The above are merely specific embodiments of the present disclosure, but the scope of the present disclosure is not limited thereto, and various equivalent modifications or substitutions within the technical scope of the present disclosure are conceivable for any person skilled in the art, and these modifications or substitutions should fall into the scope of the present disclosure. Therefore, the scope of protection of the present disclosure shall be determined by the scope of the claims.

## Claims

1. A resource configuration method for a network slice, comprising:
acquiring a quality evaluation index of each radio resource management policy, wherein the quality evaluation index comprises at least one of a physical resource block utilization rate, a block error rate, a signal to interference plus noise ratio, a number of accessed users, or a resource saturation corresponding to the radio resource management policy;
determining, based on the quality evaluation index of each radio resource management policy, predicted attribute information of the radio resource management policy; and
updating the radio resource management policy based on the predicted attribute information of the radio resource management policy to obtain an updated radio resource management policy, and reconfiguring a network resource for each network slice based on the updated radio resource management policy.

2. The resource configuration method according to claim 1, wherein acquiring the quality evaluation index of each radio resource management policy comprises:
acquiring a resource configuration influence index of each network slice, wherein the resource configuration influence index comprises at least one of a physical resource block utilization rate, a block error rate, a signal to interference plus noise ratio, a number of accessed users, or a resource saturation of the network slice; and
determining the quality evaluation index of each radio resource management policy based on the resource configuration influence index of at least one network slice corresponding to the radio resource management policy.

3. The resource configuration method according to claim 1, wherein the predicted attribute information comprises first attribute information or second attribute information, the first attribute information comprises a radio resource management policy ratio group comprising a radio resource management policy dedicated ratio, a radio resource management policy minimum ratio, and a radio resource management policy maximum ratio; and
the second attribute information comprises at least one radio resource management policy ratio group, and effective time information corresponding to each radio resource management policy ratio group, wherein the effective time information is configured to indicate an effective time period of the radio resource management policy ratio group.

4. The resource configuration method according to any one of claims 1 to 3, wherein the radio resource management policy comprises second attribute information, and the method further comprises:
determining and enabling a target radio resource management policy ratio group based on clock information and the second attribute information.

5. The resource configuration method according to claim 4, wherein determining the target radio resource management policy ratio group based on the clock information and the second attribute information comprises:
in response to the second attribute information containing effective time information matched with the clock information, determining the radio resource management policy ratio group corresponding to the effective time information as the target radio resource management policy ratio group.

6. The resource configuration method according to claim 5, wherein determining the target radio resource management policy ratio group based on the clock information and the second attribute information further comprises:
in response to the second attribute information not containing effective time information matched with the clock information, determining a preset radio resource management policy ratio group as the target radio resource management policy ratio group.

7. The resource configuration method according to any one of claims 1 to 3, wherein determining, based on the quality evaluation index of each radio resource management policy, the predicted attribute information of the radio resource management policy comprises:
running a pre-trained policy attribute prediction model to perform policy attribute prediction based on the quality evaluation index of each radio resource management policy, to obtain the predicted attribute information of the radio resource management policy,
wherein the policy attribute prediction model is obtained by iteratively training a preset machine learning model based on multiple pieces of sample data, and each piece of sample data comprises a quality evaluation index and labeled attribute information of a radio resource management policy.

8. The resource configuration method according to any one of claims 1 to 3, wherein the network resource comprises a physical resource block resource for the network slice.

9. A base station, comprising a processor, a memory, a computer program stored on the memory and executable by the processor, and a data bus configured to enable connection and communication between the processor and the memory, wherein the computer program is executed by the processor to cause the processor to implement the resource configuration method according to any one of claims 1 to 8.

10. A computer-readable storage medium storing at least one computer program, the at least one computer program is executed by at least one processor to cause the at least one processor to implement the resource configuration method according to any one of claims 1 to 8.
